# EUROPEAN PATENT SPECIFICATION

(11) **EP 3 313 761 B1**
(45) Date of publication and mention of the grant of the patent: **01.11.2023**
(21) Application number: 16745547.6
(22) Date of filing: 16.06.2016
(51) Int. Cl.: B65G 69/28

(54) **SAFETY DEVICE FOR USE IN A DOCK LEVELLER, DOCK LEVELLER HAVING SUCH A SAFETY DEVICE, METHOD OF OPERATING A DOCK LEVELLER AND METHOD OF TESTING THE SAFETY DEVICE**
SICHERHEITSVORRICHTUNG ZUR VERWENDUNG IN EINER ÜBERLADEBRÜCKE, ÜBERLADEBRÜCKE MIT SOLCH EINER SICHERHEITSVORRICHTUNG, VERFAHREN ZUM BETRIEB EINER ÜBERLADEBRÜCKE UND VERFAHREN ZUM TESTEN DER SICHERHEITSVORRICHTUNG
DISPOSITIF DE SÉCURITÉ DESTINÉ À UN NIVELEUR DE QUAI, NIVELEUR DE QUAI MUNI DE CE DISPOSITIF DE SÉCURITÉ, PROCÉDÉ DE FONCTIONNEMENT D'UN NIVELEUR DE QUAI ET PROCÉDÉ DE TEST DU DISPOSITIF DE SÉCURITÉ

(30) Priority: 24.06.2015 SE 1550870
(43) Date of publication of application: 02.05.2018
(73) Proprietor: ASSA ABLOY Entrance Systems AB, 261 22 Landskrona (SE)
(72) Inventor: VAN DE WIEL, Peter, 1674 NH Opperdoes (NL); KIKKERT, Rob, 1657 AN Abbekerk (NL)
(74) Representative: Zacco Sweden AB
(86) International application number: PCT/SE2016/000036
(87) International publication number: WO 2016/209141

(56) References cited:
- EP-B1- 1 711 422
- US-B2- 8 065 770

## Description

The invention relates to a dock leveller having a deck pivotally connected to a ramp, and a safety device having at least one electronically controlled valve for stopping a movement of the deck in response to a control signal, and at least one electronic sensor. Furthermore, the invention is related to a method of operating a dock leveller having a pivotable deck, comprising the steps of moving the deck over a preset range with an actuation arrangement, stopping the movement of the deck by at least one electronically controlled valve in response to a control signal. In addition to this the invention is directed to a method of testing an automatic fall-prevention of a dock leveller.

Dock levellers are commonly used at a ramp and/or loading dock to bridge a gap between a parked vehicle and the ramp and/or loading dock. A vehicle parks near the ramp, but with some open space between the vehicle's cargo bed and the ramp. The dock leveller is able to engage the bed of the vehicle to provide a continuous driving surface to the ramp and thereby facilitate loading and/or unloading. A forklift may drive on the deck of the dock leveller for unloading and/or loading the vehicle.

Preferably the deck is able to ride and/or float with the bed of the vehicle during engagement and/or a normal operation mode as the bed of the vehicle floats. The bed may float because different downward forces are exerted on the bed and a suspension system of the vehicle. Although a free-floating movement of the deck is desirable, it may lead to some disadvantages.

If the vehicle prematurely and/or unintentionally pulls away from the ramp, in particular with a load on the deck, the support for the dock leveller and/or the deck is removed and a fall-condition and/or free fall condition may be created. Thus, the deck may fall hitting a ground and/or a pit of the dock leveller, potentially causing injury to any personnel on the deck and/or damaging equipment and/or cargo.

For preventing a fall and/or a free-fall of the deck a safety device may be used. The safety device can have a hydraulic hose break valve, which is installed in a hydraulic actuation arrangement for the dock leveller. The hose break valve may be installed in hydraulic cylinders for moving the deck. During a loading and/or unloading process of the vehicle, preferably during a normal operation mode of the dock leveller, the deck is free floating. When the vehicle leaves the ramp unintentionally and the deck is under load, the pressure in the hydraulic cylinder increases excessively which actuates the hose break valve. The adjusting and/or type selection of the hose break valve is related to the geometry, dimension and/or mass of the dock leveller. Thus, it is a drawback that different hose break valves are needed on different dock leveller designs.

A dock leveller according to the preamble of claim 1 is known from document EP 1 711 422 B1. According to this document an electronic sensor is used as a position sensor for detecting the position of a vehicle in front of the dock leveller. In case the vehicle has unexpectedly moved away a certain distance from the dock leveller during a normal operation mode of the dock leveller a signal is send to an electronically controlled valve, like a solenoid valve, for preventing a free-fall of the deck of the dock leveller.

A drawback of this solution is that the electronic sensor is used to detect the position of the vehicle. As the dimensions and designs of vehicles varies and the parking distance of the vehicle in regard to the ramp may vary also the free-fall protection may not be as reliable as desirable.

The functionality of the safety device to prevent a fall and/or free-fall of the deck should be tested from time to time. Preferably a testing should be performed on an annual base. The testing may be performed according to EN1398 Dock-Levellers-Safety-Requirements. A test load of 25 % or up to 35 % of the maximum and/or rated load is positioned on the dock leveller, preferably in the middle of the deck. Thus, in case of a 6 tons dock leveller the test load may be 1.500 kg. The dock leveller and/or the deck is aligned in a substantially horizontal position. The dock leveller and/or the deck rest on a supporting element. Preferably the temperature of the environment is 20°C ± 10°C. For performing the testing the support element is removed and the fall of the deck shall be stopped and/or a velocity of the falling movement shall be reduced by the safety device. According to EN1398 the maximum falling distance shall not be greater than 6 % of the length of the dock leveller and/or the deck. The falling distance is measured from an axis of a deck joint for pivoting the deck to a front edge of the deck. Alternatively to the maximum falling distance or in combination with the maximum falling distance the velocity of the deck movement shall not be more than 0,05 m/s.

Experience has shown that a regular testing, preferably according to EN1398, of an installed dock leveller and/or safety device has usually not been performed. Testing in practise is usually not feasible because of the high test weight. In case of a testing with a test load the leveller is heavily loaded which may reduce the lifetime of the dock leveller. However, not executing a test of the safety device leads to the risk that a damage and/or a malfunction of the safety device remains undiscovered. Thus, the safety device may fail in case of a fall and/or free-fall condition and/or legal regulations cannot be met.

It is therefore a principal object of the present invention to enhance a dock leveller with a safety device as mentioned in the preceding introduction such that the functionality is enhanced and/or that a testing can be performed in an effective and reliable way.

The object of the invention is accomplished by a dock leveller as mentioned in the preceding introduction, wherein the electronic sensor is constructed and/or arranged for detecting a fall-movement of the deck. The dock leveller according to the present invention is a dock leveller for docking a deck to a bed of a vehicle, wherein the dock leveller has a deck pivotally connected to a ramp, an actuation arrangement for moving the deck and a safety device. The safety device has at least one electronically controlled valve for stopping a movement of the deck in response to a control signal. The actuation arrangement for moving the deck comprises a fluid system and/or hydraulic system and at least one fluid driven and/or hydraulically driven cylinder for the movement and/or rotation of the deck, wherein the electronically controlled valve is coupled to the actuation arrangement for moving the deck over a preset range and/or to the cylinder for moving the deck, whereby the movement of the cylinder is stoppable by the electronically controlled valve in a closed state. Said safety device further comprises at least one electronic sensor, wherein an arrangement of the electronic sensor is provided for detecting a fall-movement of the deck, wherein the electronic sensor is arranged for detecting a fall-movement of the deck when a velocity of the deck exceeds a preset threshold for a preset period of time and provide a control signal for stopping the movement of the deck.

Furthermore, the object of the invention is accomplished by a method according to the preceding introduction, wherein a fall-movement of the deck is detected by monitoring a velocity and/or an acceleration of the deck with an electronic sensor and/or wherein the functionality of the electronic sensor, of the electronically controlled valve, of a control unit and/or of a warning system is tested.

As an advantageous result the position and/or movement of the deck is directly monitored and/or controlled by the electronic sensor. Thus, the detection of a fall condition and/or a free-fall condition depends not on the determination of the position of a vehicle in front of the dock leveller. The direct monitoring of the deck leads to a more reliable detection of a falling movement and/or a free-fall movement of the deck. Furthermore, the solution makes it possible to realise a method for testing the safety device in an effective, reliable and feasible way. Preferably the safety device is an automatic safety device for automatic prevention of a fall and/or of a free-fall of the deck. The deck can be hinged to the ramp. The ramp can be a loading dock. Preferably the ramp and/or loading dock has a substantially even floor and/or is part of a building and/or warehouse. It is a further advantage that the functionality of the safety device according to the invention is not dependent on the temperature as the electronic sensor and an electronically controlled valve are used. A fail safe is realisable as in case of an electric cable breakage and/or in case of losing electrical power the electronically controlled valve can automatically close, which will block any movement of the dock leveller.

According to a further embodiment of the invention the electronic sensor is a position sensor and/or the electronic sensor is designed and/or arranged for monitoring a movement, velocity and/or an acceleration of the deck. The electronic sensor may be an ultrasonic sensor, an infrared sensor, a laser, a laser photo-eye system, an encoder and/or a pulse counter. The electronic sensor may be coupled to a control unit. A sensing element of the electronic sensor can be directed towards the deck. Thus, the electronic sensor itself may be stationary. In an alternative embodiment the electronic sensor is arranged at the deck for moving together with the deck. A sensing element of the electronic sensor may be directed in this case towards a stationary element. The stationary element may be a ground, a pit and/or a frame of the dock leveller or ramp. Preferably the electronic sensor is equipped to monitor a change in position of the deck over time. The electronic sensor can be designed and/or arranged for detecting a free-fall movement of the deck. The data and/or measurements can be stored, especially preferred in a data storage of a control unit. The collected date can be used to determine the movement, velocity and/or acceleration of the deck.

As mentioned, the electronic sensor is arranged for detecting a fall-movement and/or a free-fall movement of the deck when a velocity of the deck exceeds a preset threshold. Preferably the electronic sensor and/or a control unit provides a sensor signal and/or a control signal for stopping the movement of the deck when detecting a deck movement with a velocity exceeding a preset threshold. Especially preferred the electronic sensor, an encoder, a pulse counter and/or a time measurement is arranged for providing the sensor signal and/or control signal for stopping the movement of the deck when the velocity of the deck exceeds the preset threshold for a preset time period. Thus, the stopping of the movement is initiated after the threshold is exceeded for a certain time. This kind of a delay of the stopping of the movement prevents an unwanted stopping, preferably in case of a short time bouncing deck. A short time bouncing of the deck can occur for example during loading and/or unloading and/or if a movement of the deck is suddenly stopped or reversed by an operator. Preferably the falling of the deck is always stopped and/or the falling distance is within 6 % of the length of the deck. The deck may comprise a pivotable mounted lip and the length of the deck may include the length of the lip, preferably from a front edge of the deck having a lip joint to a free edge of the lip.

The threshold for the velocity of the deck can be set within a range of 0,05 m/s to 0,20 m/s. Preferably the threshold is set at 0,05 m/s. In this case the requirement of EN 1398 can be fulfilled saying that the velocity of the deck has to be reduced to not more than 0,05 m/s. More preferably the threshold is set at 0,12 m/s or at 0,14 m/s. In this case the requirements of EN1398 can be fulfilled by stopping the movement of the deck within 6 % of the length of the deck. Here m/s is an abbreviation for meters per second. The preset threshold for the velocity of the deck may be higher than a normal lowering speed of the deck. The preset time period may be less than 1 second. The movement of the deck may be stopped when a maximum velocity of the deck, preferably at a front edge of the deck, exceeds the threshold. Thus, the deck cannot be moved with a velocity over the threshold. The preset threshold of the velocity of the deck and/or the preset time period may be measured by counting pulses of an encoder. The control signal may be provided in case that a preset amount of pulses have been counted within a preset time period.

According to a further embodiment of the invention the preset period of time is defined by a bouncing distance of the deck divided by a respective bouncing velocity of the deck. A bouncing of the deck may occur during normal loading and/or uploading operation. Especially when a forklift is used for loading and/or uploading a vehicle or a truck, the deck may move up and downwards. These up and downwards movements lead to a typical bouncing effect of the deck. The downwards movement of the deck during this bouncing can exceed the preset threshold for the velocity of the deck. However, the exceeding of the threshold is limited in time. Preferably a blocking of the deck during typical bouncing of the deck is avoided. Thus, a velocity exceeding the preset threshold may be ignored during the preset time period. The preset period of time can be used to discriminate a typical bouncing of the deck from a fall-movement of the deck. A blocking of the deck can be activated only when the deck is moving with a higher velocity than the threshold for a longer period of time than it can be caused by a typical bouncing effect. The preset period of time can be calculated by dividing the bouncing distance of the deck by the corresponding bouncing velocity of the deck. The bouncing velocity may exceed the preset threshold of the velocity of the deck and/or may be determined by the electronic sensor and/or a control unit. The bouncing distance may be defined as the difference of the height of the front edge of the deck or lip between an uppermost position of the deck and a lowermost position of the deck during a bouncing situation or a loading and/or uploading situation. Preferably the bouncing distance is a mean bouncing distance or a maximum bouncing distance. The bouncing distance and/or the bouncing velocity may depend on the dimension and/or length of the deck. The threshold, the preset period of time, the bouncing distance and/or the bouncing velocity may be precalculated. The preset time period may be less than 1 second. The preset time period can be set within a range of above 0 second to 0,9 second. Preferably the preset time period is less than 0,5 second or less than 0,1 second.

The electronically controlled valve can be electronically opened and/or closed. The electronically controlled valve can be in an open state in case of a normal operation mode of the dock leveller. In case of a fall detection and/or a free-fall detection the electronically controlled valve is in a closed state. As mentioned above, an actuation arrangement for moving the deck over a preset range is provided. As mentioned above, the electronically controlled valve can be coupled to the actuation arrangement for controlling the movement of the deck and/or a cylinder. Preferably the cylinder is directly or indirectly coupled to the deck for moving the deck. The movement of the cylinder can be stopped and/or blocked by the electronically controlled valve, especially preferred when the electronically controlled valve is closed. The electronically controlled valve can be a magnetic valve and/or solenoid valve, preferably a normal closed magnetic valve. A normal closed magnetic valve is closed in a deactivated mode and is open in an, preferably electrically, activated mode. The safety device may replace an ordinary, preferably magnetic, valve.

As mentioned above, the actuation arrangement for moving the deck comprises a fluid system and/or a hydraulic system. The actuation arrangement is equipped and/or designed for driving the dock leveller and/or the deck. As mentioned above, the actuation arrangement comprises at least one fluid driven and/or hydraulically driven cylinder for the movement and/or rotation of the deck. The safety device and/or the dock leveller can have one or more electronically controlled valves. When more than one electronically controlled valve is present, these several valves may be controlled and/or driven simultaneously for being closed and/or opened at the same time. Preferably a first electronically controlled valve is assigned to a first fluid access for moving a piston in a first direction within the cylinder and a second electronically controlled valve is assigned to a second fluid access for moving the piston in a second direction within the cylinder.

A control unit can be coupled with the at least one electronic sensor and the at least one electronically controlled valve. The control unit can have a microprocessor for controlling the operation of the dock leveller. Preferably the control unit is designed and/or arranged for analysing the sensor signal and/or control signal of the at least one electronic sensor. The control unit can receive one or several sensor signals and/or control signals of the electronic sensor, process the received data and/or control the at least one electronically controlled valve. Especially preferred the control unit is designed and/or arranged for sending a control signal to the electronically controlled valve. The control unit can send an actuation signal to the electronically controlled valve for opening the valve and/or a deactivation signal to the electronically controlled valve for closing the valve.

According to a further embodiment of the invention, which can be an independent and/or separate invention itself, a testing unit is present for testing an automatic fall prevention and/or an automatic free-fall prevention. Preferably the testing unit serves and/or is arranged for testing the functionality of the components of the safety device. Especially preferred the testing unit serves and/or is equipped for testing the functionality of the at least one electronic sensor, of the at least one electronically controlled valve, of a control unit and/or of a warning system. The testing can be performed electronically. Furthermore, the testing unit can be connected with the electronic sensor, the electronically controlled valve, the control unit and/or the warning system. The connection can be established by a, preferably electric, line.

Preferably the testing unit is designed as a separate service tool which is connectable with a control unit. Thus, the testing unit may be connected with the control unit just in case that a testing procedure shall be performed. After a successful testing of the safety device and/or of components of the safety device the testing unit can be disconnected. In an alternative embodiment of the invention the testing unit is an integrated part of the dock leveller and/or the control unit. In this embodiment the testing procedure may be performed continuously and/or at regular, preferably preset, time intervals.

The safety device can comprise a, preferably electronic, warning system for providing a sound alarm, an audio alarm, a visual alarm and/or a light signal. The warning system can be activated in case of a detected falling movement and/or a free-fall movement of the deck and/or in case of a deactivated, preferably closed, electronically controlled valve. The warning system can be activated in case of a movement of the deck with a velocity higher than a preset threshold, preferably when the velocity of the deck exceeds the preset threshold for a preset time period. The warning system can be activated in case of a deactivated or closed electronically controlled valve. Preferably the threshold is set at 0,05 m/s or at 0,12 m/s or at 0,14 m/s.

The method of operating a dock leveller having a pivotable deck according to the present invention, which can be an independent and/or separate invention itself, comprises the steps of moving the deck over a preset range with an actuation arrangement, stopping the movement of the deck by at least one electronically controlled valve in response to a sensor signal and/or a control signal of an electronic sensor and/or of a control unit. Preferably the deck is movable by the actuation arrangement from a normal or stored position, also known as a dock level position, in which the deck is even with the ramp and/or loading dock of a building or warehouse, to several operating positions above and/or below the normal or stored position. The range of operating positions is useful to engage vehicles of different bed heights and to maintain engagement with the bed as its height fluctuates with the reaction of the suspension of the vehicle during loading and/or unloading. The method further comprises detecting a falling movement and/or a free-fall movement of the deck by monitoring a velocity and/or an acceleration of the deck with the electronic sensor.

Preferably the electronic sensor and/or a control unit sends a sensor signal and/or a control signal for stopping and/or blocking the movement of the deck when the electronic sensor and/or the control unit detects a deck movement with a velocity exceeding a preset threshold. Preferably a time period of the velocity exceeding the preset threshold is measured and/or the control signal for stopping the movement of the deck is provided when the velocity of the deck exceeds the preset threshold for a preset time period. Especially preferred the threshold is set at 0,05 m/s or at 0,12 m/s or at 0,14 m/s or the preset threshold for the velocity of the deck is higher than a normal lowering speed of the deck. Especially preferred the electronic sensor monitors a change in position of the deck over time. The electronic sensor may, preferably continuously, execute a self-test. In case of an error and/or a malfunction of the electronic sensor the safety device and/or the dock leveller can be deactivated and/or an error message can be displayed on a control unit.

The method of testing an automatic fall prevention and/or an automatic free-fall prevention for a dock leveller according to the present invention, having a safety device according to the present invention by a testing unit, whereby the testing method can be an independent and/or separate invention itself, comprises the steps of testing the functionality of the electronic sensor, of the electronically controlled valve, of a control unit and/or of a warning system by the testing unit. Preferably the testing of the functionality is performed only electronically.

Preferably the method of operation and the method of testing method are combined in one method or procedure. During the use of the dock leveller the deck bridges a gap between the bed of the vehicle to the ramp. The deck may float up and down to accord with variations in height of the bed during use of the dock leveller and when an end of the deck and/or the lip is arranged on the bed of a vehicle. During the use and/or normal operation of the dock leveller the velocity of the deck may be measured. Preferably the safety device measures the velocity in relation to the ground on which the wheels of the vehicle stands on. The velocity can be determined by use of the measurements of the electronic sensor.

Preferably a limit or threshold for the velocity of deck has been set. This preset threshold for the velocity of deck may be set to 0,05 ms or to 0,12 m/s or to 0,14 m/s. A programmable logic controller can be used for setting this threshold.

During operation of the dock leveller the measured velocity of the dock leveller can be continuously compared, preferably by the control unit, with the set threshold. In more detail it can be controlled if the measured velocity is greater than the set threshold. If this is the case the movement of the deck is automatically blocked. For the blocking of the movement a control signal is send from the control unit to the at least one electronic valve for closing this valve. By closing valve a fluid flow of the actuation arrangement is blocked. As no fluid can flow into or out of the cylinder a movement of the deck is stopped. Thus, a fall and/or free-fall of the deck and/or the lip on the ground by a pivoting movement around the deck joint is prevented.

Preferably with the blocking of the movement an alarm is, preferably automatically, set on. The alarm may be a visual alarm and/or a sound alarm.

After the blocking of the movement of the deck the dock leveller can be checked. Preferably the dock leveller is checked by a qualified service field engineer. The check may comprise inspections of all relevant parts of the dock leveller. For example the cylinder, the piston, the valve, the control unit and/or the electronic sensor, etc. may be checked. During the check it is examined if the dock leveller comprises any damage. If a damage of the dock leveller is recognized the dock leveller has to be repaired. Preferably the repair is done by a qualified service field engineer.

Preferably after a check and/or repair of the dock leveller and/or the safety device it is set back to normal operation. A reset software may be used for setting the dock leveller and/or the safety device to normal operation after a movement of the deck has been blocked. The reset software may be no integrated part of the dock leveller and/or the safety device. The reset software may be installed on a testing unit, device and/or service tool separate to the dock leveller and/or safety device. Preferably the reset software is realized as an APP (Application software) for use on a mobile device. The mobile device can be a tablet, a laptop, a notebook and/or any kind of a suitable mobile computer device. Preferably the dock leveller and/or the safety device can be set to normal operation only by the use of the reset software.

As soon as the safety device is set to normal operation the alarm is, preferably automatically, set off.

A testing method and/or a test procedure may be performed as mentioned above for testing an automatic fall prevention and/or an automatic free-fall prevention for a dock leveller. Preferably a test software is used for performing the testing method and/or the test procedure. The test software may be no integrated part of the dock leveller and/or the safety device. The test software may be installed on a testing unit, device and/or service tool separate to the dock leveller and/or safety device. Preferably the test software is realized as an APP (Application software) for use on a mobile device. The test software may be a part of reset software. Alternatively the test software may be realized as a separate APP for use on a mobile device. Preferably the test procedure is performed by a qualified service field engineer.

By the testing method the function of the at least one electronic sensor and/or the function of the at least one electronically controlled valve may be tested. Preferably the testing is initiated by a single action of an operator or a qualified service field engineer. In a first step the dock leveller is operated like in normal operation by using the usual controls. During the sinking of the deck the test procedure may then be initiated, preferably by a single action. The single action may be realized by pressing a button. Preferably the button is arranged on a service tool having the test software and/or the reset software. The button can be a real button or a virtual button.

The test procedure or testing method can simulate an increase of the velocity or the sinking speed of the deck. Preferably a velocity of deck is simulated by the software that exceeds the set threshold. Caused by the simulated velocity exceeding the threshold the at least one electronic sensor has to cut off the power to the at least one electronically controlled valve. Preferably the data measured by the electronic sensor is send to a control unit. The control unit can determine by the measured data if the velocity of the deck exceeds the threshold. In case that the determined velocity exceeds the threshold the control unit can cut off the power to the valve. Preferably the control unit sends a control signal to the valve that causes the electric cut-off of the valve. Caused by the electric cut-off the valve gets in its closed position which blocks the movement of the dock leveller and/or the deck. Preferably a normal closed valve or a normal closed magnetic valve is used.

Preferably the sinking of the deck has to stop within a defined range and/or distance. This range and/or distance may be dependent on the length of the deck and/or the dock leveller. The range and/or distance can be defined by demanding that the deck has to stop within 6 % of the length of the deck and/or of the dock leveller. Thus, the dropping height of the deck is limited to less or not more than 6 % of the length of the deck and/or dock leveller. Preferably the movement of deck is stopped or blocked within a dropping height of the deck and/or the lip of less than 0,2 m or.0,12 m The range, dropping height and/or distance may be set to 0,12 m. Thus, the deck has to be stopped within a dropping range of 0,12 m. Especially preferred the length of deck and/or of dock leveller is defined as the distance between a front edge of deck or lip and a ramp or deck joint for pivotally connecting the deck to the ramp. The range, dropping height and/or distance can be measured at the front edge of the deck or of the lip. Preferably the distance is determined as the difference of the height of the front edge of the deck or lip between a first position of the deck and a second position of the deck. The first position may be the position of the deck or lip when the velocity of the deck exceeds the threshold the first time. The second position is the position of the deck or lip when the movement is blocked by the safety device because the velocity of the deck exceeds the threshold. If the deck has been blocked within the set range and/or distance, the test has been passed successfully.

In case that the measured velocity is not greater than the set threshold the velocity of deck is within an allowable range. Preferably the velocity of the deck is not faster than 0,05 m/s or 0,12 m/s.

During normal operation of the dock leveller it can be decided if the safety device has to be checked or not. A check of the safety device may be performed after a blocking by the safety device, after a repair, after a maintenance or as a periodically, preferably annular, appointed service or check.

An advantage of the invention is that the solution is not prone to temperature changes. Thus, it is operational in all usual environmental circumstances. Preferably the safety device realizes a fail safe function. This means that a movement of the deck and/or the dock leveller is automatically stopped in case of a power failure and/or a wire breakage. Furthermore, the safety device can be installed afterwards. This allows a retrofitting of existing dock levellers. The safety device can be combined with a visual and/or auditory warning system.

Before performing the testing method the first time a certification procedure may be performed. Preferably the certification procedure is performed in accordance with the EN1398 Dock-Levellers-Safety-Requirements. A test load is positioned on the dock leveller in the middle of the deck. The deck or a lip hinged to the deck rests on a supporting element. After removing the supporting element the deck makes a falling movement and/or a free-fall movement. The electronic sensor and/or a control unit identifies the fall condition and/or the free-fall condition as the velocity of the deck exceeds the preset threshold. A signal is provided by the electronic sensor and/or the control unit to close the electronically controlled valve such that the deck stops lowering within 6% of the deck length. Thus, the dock leveller, the safety device, the electronic sensor, the electronically controlled valve and/or the control unit is set up in a way that the requirements according to EN1398 are fulfilled. Preferably, after the safety device is certified once by a certification procedure the safety device can be used and/or installed on every dock leveller without the necessity of executing the certification procedure again. Especially preferred the certification procedure is conducted with the highest rated load on the smallest dock leveller. The regular and/or annual testing method for the installed and/or certified safety device can be executed without a test load on the deck.

The following detailed description, given by way of example and not intended to limit the present invention solely thereto, will best be appreciated in conjunction with the accompanying figures, wherein like reference numerals denote like elements and parts, in which:
- Fig. 1: is a schematic side view of a dock leveller according to the present invention in a first operation mode,
- Fig. 2: is a schematic side view of the dock leveller with the safety device according to figure 1 in a further operation mode,
- Fig. 3: is a schematic side view of the dock leveller with the safety device according to figure 1 in a testing mode,
- Fig. 4: is a schematic flowchart of an operation method according to the present invention,
- Fig. 5: is a schematic flowchart of a testing method according to the present invention and
- Fig. 6: is a schematic flow chart of a combined operation and testing method according to the present invention.

The present invention will now be described more fully hereinafter with reference to the accompanying figures in which preferred embodiments of the invention are shown. This invention may, however, be embodied in many different forms and should not be construed as limited to the illustrated embodiments set forth herein. Rather, these illustrated embodiments are provided so that this disclosure will be thorough and complete, and will fully convey the scope of the invention to those skilled in the art.

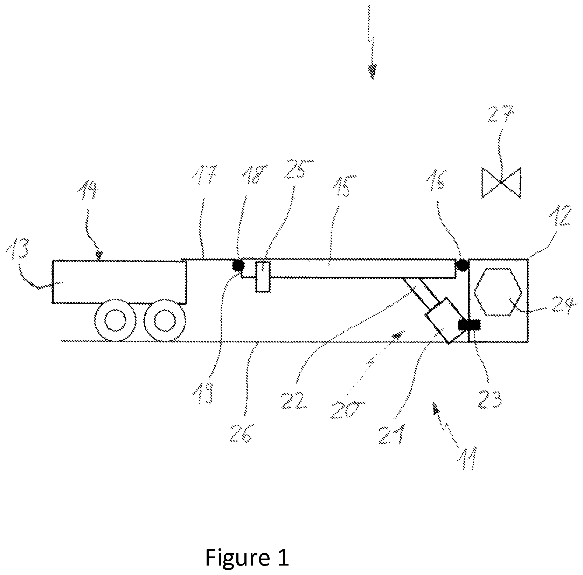

Fig. 1 is a schematic side view of a dock leveller 10 according to the present invention in a first operation mode. The dock leveller 10 is mounted to a ramp 12. The ramp 12 serves as a dock platform for a vehicle 13. The vehicle 13 has a bed 14.

The dock leveller 10 facilitates the loading and unloading of the vehicle 13 by providing a bridge-like structure from the ramp 13 to the bed 14 of the vehicle 13. The dock leveller 10 comprises a deck 15. Deck 15 is pivotable mounted to the ramp 12 by a deck joint 16. An end of the deck 15 facing away from the deck joint 16 comprises a lip 17. Lip 17 is pivotable mounted to a front edge 19 of the deck 15 by a lip joint 18. The lip 17 spans a gap between the end of the bed 14 facing towards the ramp 12 and the front edge 10 of deck 15, whereby lip 17 rests upon the bed 14 of vehicle 13.

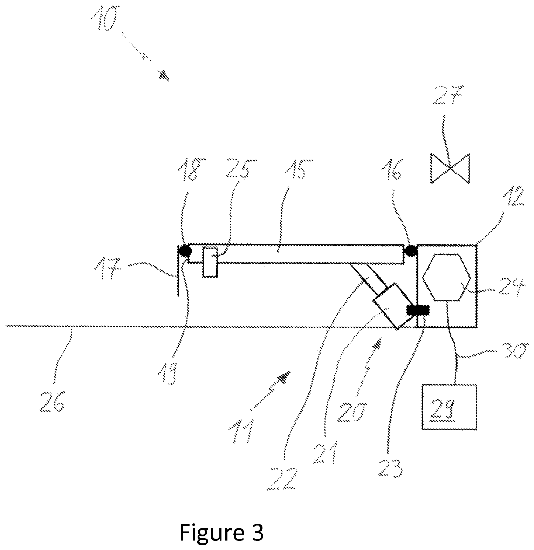

The deck 15 can be moved or swivelled by an actuation arrangement 20. By the actuation arrangement 20 the front edge 19 and the lip 17 can be raised and lowered to the approximate height of bed 14. Lip 17 is pivotable between an extended lip position according to figure 1 and a retracted lip position according to figure 3.

The actuation arrangement 20 comprises a fluid system to drive the deck 15 and/or lip 17 by a fluid. In this embodiment the actuation arrangement 20 provides a hydraulic drive. The actuation arrangement has a cylinder 21, which cooperates with a piston 22.

An electronically controlled valve 23 is assigned to the actuation arrangement 20. The valve 23 is in connection with the cylinder 21. Furthermore, the valve 23 is integrated in a fluid line of the actuation arrangement 20. In case that the valve 23 is electronically activated the valve 23 is open and the fluid of the actuation arrangement 20 can flow into and out of the cylinder 21. In case the valve 23 is electronically deactivated the valve 23 is closed to prevent, block or stop any fluid flow. The valve 23 is a magnetic valve. In dependence of the actual design of the actuation arrangement 20 more than one valve 23 may be present for providing automatic fall prevention and/or free-fall prevention for the deck 15. A control unit 24 is connected with the valve 23.

The dock leveller 10 has a safety device 11 with an electronic sensor 25 for monitoring the movement of the deck 15. The electronic sensor 25 is also in connection with the control unit 24. By the electronic sensor 25 a fall-movement and/or a free-fall movement of the deck 25 is detectable in case the vehicle 13 moves prematurely or unintentionally away from the ramp 12. In this embodiment the electronic sensor 25 is mounted at the deck 15 adjacent to the front edge 19. The electronic sensor 25 is directed towards a stationary element, which is according to this exemplary embodiment a ground 26 below the deck 15. A distance between the electronic sensor 25 and the ground 26 is measured. In this embodiment the distance between the electronic sensor 25 and the ground 26 is continuously measured by the electronic sensor 25. The data derived by the electronic sensor 25 is send to the control unit 24. The control unit 24 evaluates and analyses the data to determine a movement and velocity of the deck 15. In this embodiment the electronic sensor 25 is an ultrasonic sensor. However, an alternative embodiment of the electronic sensor 25 is possible.

The dock leveller 10 comprises a warning system 27. The warning system is connected with the control unit 24. In case of a fall movement and/or a free-fall movement of the deck 15 the warning system 27 is activated by the control unit 24 to provide a fault signal, which may be an acoustic and/or visual signal.

In the first operation mode shown according to figure 1 the deck 15 of dock leveller 10 is positioned such that a gap between the ramp 12 and the bed 14 of the vehicle 13 is bridged, whereby the lip 17 rests on the bed 14. During this first operation mode the lip 17 and deck 15 are able to ride with the vehicle bed 14 as the bed 14 floats, for example, as different downward forces are exerted on the bed 14 and a suspension system of the vehicle 13.

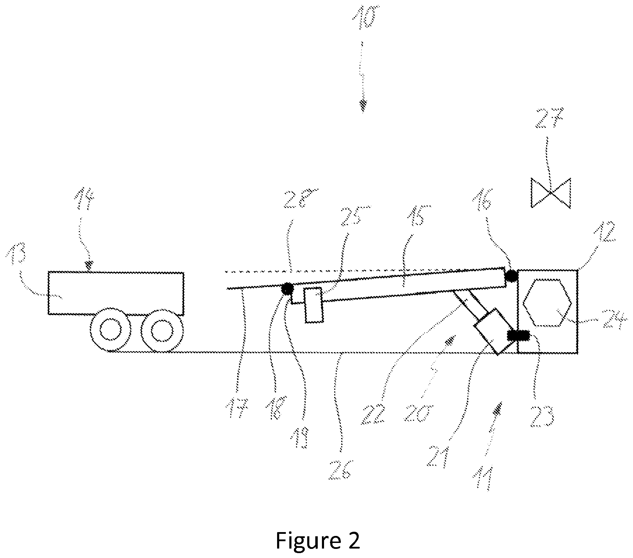

Fig. 2 is a schematic side view of the dock leveller 10 with the safety device 11 according to figure 1 in a further operation mode. According to this further operation mode the vehicle 13 has prematurely or unintentionally moved away from the ramp 12 and the dock leveller 10. Thus, the support for the lip 17 and the deck 15 is removed and a fall condition and/or a free-fall condition is created. In this case the deck 15 falls towards the ground 26. In more detail, the deck 15 pivots around the axis of the deck joint 16 so that the deck 15 and lip 17 leaves the initial position, which is indicated by the dashed line 28.

The distance between the electronic sensor 25 and the stationary element, here the ground 26, is reduced. As the electronic sensor 25 continuously measures the distance to the ground 16 the control unit 24 recognizes a fall-movement and/or free-fall movement of the deck 15. Furthermore, the control unit 24 recognizes that the velocity of the deck exceeds a preset threshold for a preset time period. Thus, the valve 23 is deactivated and closed by the control unit 24, which leads to a blocking of the actuation arrangement 20 and/or the cylinder 21. Accordingly the fall-movement and/or free-fall movement of the deck 15 is stopped. At the same time of the deactivation of valve 23 the warning system 27 is activated by the control unit 24.

Fig. 3 is a schematic side view of the dock leveller 10 with the safety device 11 according to figure 1 in a testing mode. In the testing mode no vehicle 13 is positioned in front of the dock leveller 10 and the deck 15 of the dock leveller 10 does not rest on a bed 14 or any other supporting element. The lip 17 is in a retracted lip position. In the retracted lip position the lip 17 is pivoted around the lip joint 18 such that according to this embodiment the lip 17 is aligned in an substantially right angle to the plane of the deck 15, whereby a free end of the lip 17 is facing towards the ground 26. A plane of deck 15 is according to this embodiment aligned in a substantially horizontal position.

In the testing mode a testing unit 29 is provided. The testing unit 29 is connected with the control unit 24. In this embodiment the testing unit 24 is a separate service tool which is connected with the control unit 24 by a line 30. In an alternative the testing unit 29 may be connected to the control unit by a wireless connection. The separate testing unit 29 is coupled with the control unit 24 only for performing a test. In an alternative embodiment the testing unit 29 may be a permanent part of the dock leveller 10 and/or the control unit 24. The testing unit 29 may be an integrated part of the control unit 24. According to a further alternative the testing unit 29 may be realized by a software. In this case the software solution of the testing unit 29 may run on any appropriate platform and/or service tool.

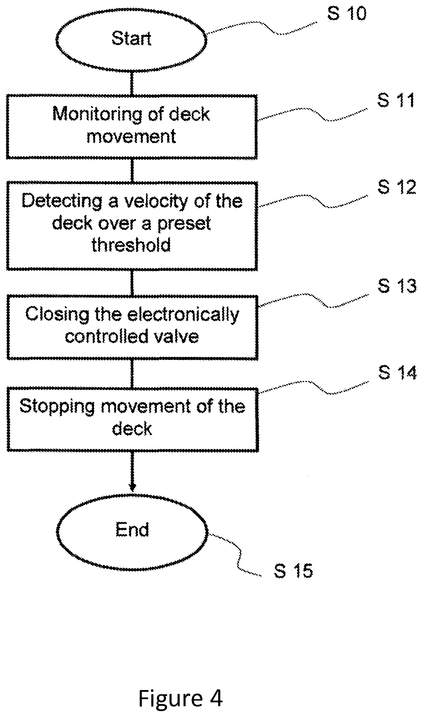

Fig. 4 is a schematic flowchart of an operation method according to the present invention. After starting the operation method according to step S10 a movement of the deck 15 of the dock leveller 10 according, for example, to figures 1 to 3 is monitored.

For monitoring a movement of deck 15 the electronic sensor 25 is used, which continuously measures or determines the distance of the electronic sensor 25 and/or the deck 15 to a stationary element, which is in this exemplary embodiment the ground 26. Because of the continuous measurements by the electronic sensor 25 and a continuous analysis of the data by the control unit 24 a change in the position of the electronic sensor 25 and/or deck 15 over time is determinable.

By the electronic sensor 25 and the control unit 24 a velocity of a movement of deck 15 is determined and/or calculated. An actual value of the velocity is compared to a preset threshold. In this embodiment the threshold is set at 0,12 m/s. As long as the velocity of the electronic sensor 25 and/or deck 15 does not exceed the threshold the dock leveller 10 is in a normal operation mode. Even if the threshold is exceeded by the velocity of the dock leveller 10, the dock leveller 10 remains in its normal operation mode as far as the velocity exceeds the preset threshold not longer than a preset time period.

In case a velocity of the deck 15 is detected according to step S12 which is over or exceeds the preset threshold for at least a preset time period, the electronically controlled valve 23 is closed according to step S13. For doing so the control unit 24 sends a deactivation signal to the electronically controlled valve 23. The valve 23 is deenergized by the deactivation signal. By closing the valve 23 a fluid flow of the actuation arrangement 20 is blocked. As no fluid can flow into or out of the cylinder 21 a movement of the deck 15 is stopped according to step S14. Thus, a fall and/or free-fall of the deck 15 and/or the lip 17 on the ground 26 by a pivoting movement around the deck joint 16 is prevented. The operation mode for automatic fall prevention and/or free-fall prevention ends according to step S15.

In an alternative embodiment the control unit 24 activates the warning system 27 when the control unit 24 recognizes a velocity of the deck 15 above the threshold, preferably for a preset time period. The warning system 27 releases an acoustic and visual signal for attracting attention of personnel.

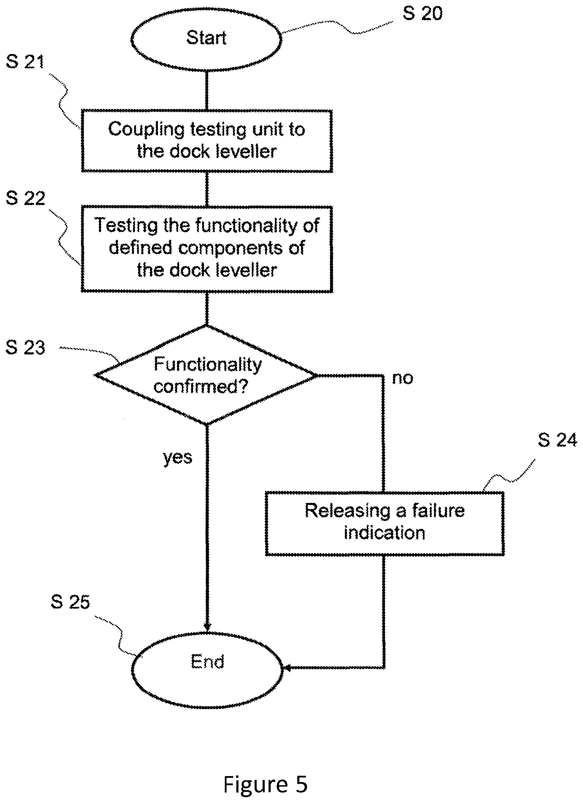

Fig. 5 is a schematic flowchart of a testing method according to the present invention. The testing method is started according to step S20. According to this embodiment and step S21 a testing unit 29 is coupled to the dock leveller 10. In this example the testing unit 29 is a separate testing tool that is connected via a line 30 to the control unit 24. In an alternative embodiment the testing unit 29 is a permanent part of the control unit 24 and/or a software solution.

The functionality of defined or preset components of the dock leveller 10 are tested with the testing unit 29 according to step S22. In this embodiment the operability and/or functionality of the electronic sensor 25, of the electronically controlled valve 23, of the control unit 24 and of the warning system 27 is tested.

In case the functionality can be confirmed according to step S23 the testing method ends with step S25. In case the functionality of at least one of the tested components cannot be confirmed a failure indication according to step S24 is released. The release of the failure indication may cause an automatic deactivation of the dock leveller 10. The deactivation of the dock leveller 10 may be revoked after inspection or repair of the defect component and successfully completing the testing method.

The testing method according to steps S20 to S25 may be performed on a preset regularly basis or on a continuously basis. Before performing the testing method the first time a certification procedure may be performed. Preferably the certification procedure is performed in accordance with the EN1398 Dock-Levellers-Safety-Requirements. Thus, a test load of at least 25 % or up to 35 % of the maximum load capacity, preferably 100 % of the maximum load capacity, of the dock leveller 10 is positioned on the dock leveller 10 in the middle of deck 15. The lip 17 rests on a supporting element in a first operation mode according to figure 1. After removing the supporting element the deck 15 makes a fall-movement and/or a free-fall movement and the dock leveller 10 is in the further operation mode according to figure 2. The dock leveller 10, the safety device 11, the electronic sensor 25, the electronically controlled valve 23 and/or the control unit 24 is set up in a way that the requirements according to EN1398 are fulfilled. These requirements comprise that a falling distance of deck 15 is less than 6 % of the length of the dock leveller 10 or deck 15.

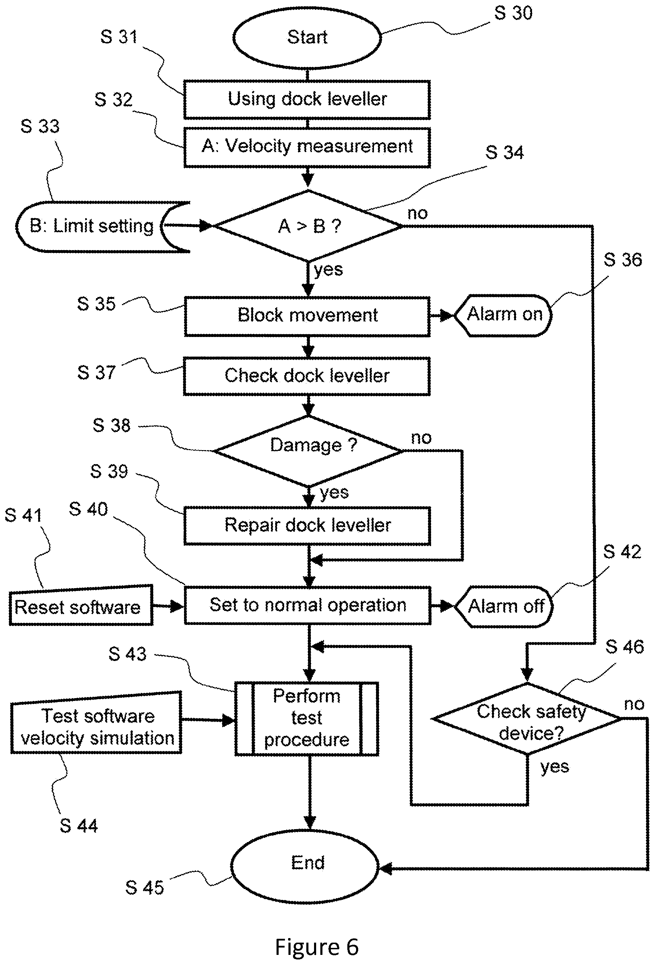

Fig. 6 is a schematic flow chart of a combined operation and testing method according to the present invention. The method is started with step S30 and using the dock leveller 10 according to step S31. During the use of dock leveller 10 the deck 15 bridges a gap between the bed 14 of the vehicle 13 to the ramp 12. Deck 15 may float up and down to accord with variations in height of the bed 14.

Furthermore, the safety device 11 measures during the use of the dock leveller 10 the velocity of the deck 15 according to step S32. In this embodiment the safety device 11 measures the velocity in relation to the ground 26 on which the wheels of the vehicle 13 stands on. The measured velocity is indicated by letter A. The velocity is measured by the electronic sensor 25.

According to step S33 a limit or threshold for the velocity of deck 15 has been set. This preset threshold for the velocity of deck 15 is indicated by letter B. In this embodiment the threshold for the velocity of deck 15 is set to 0,14 m/s. Preferably a programmable logic controller is used for setting the threshold.

The measured velocity A is compared by the control unit 24 with the set threshold B according to step S34, whereby it is controlled if the measured velocity A is greater than the set threshold B.

If this is the case the movement of the deck 15 is blocked according to step 35. For the blocking of the movement a control signal is send from the control unit 24 to the electronic valve 23 for closing it. By closing valve 23 a fluid flow of the actuation arrangement 20 is blocked. As no fluid can flow into or out of the cylinder 21 a movement of the deck 15 is stopped. Thus, a fall and/or free-fall of the deck 15 and/or the lip 17 on the ground 26 by a pivoting movement around the deck joint 16 is prevented.

With the blocking of the movement an alarm is set on according to step S36. The alarm may be a visual alarm and/or a sound alarm.

According to step S37 the dock leveller 10 has to be checked. Preferably the dock leveller 10 is checked by a qualified service field engineer. The check may comprise inspections of all relevant parts of the dock leveller, like for example cylinder 21, piston 22, valve 23, control unit 24, electronic sensor 25, etc.

During the check it is examined if there is any damage to the dock leveller 10 according to step S38. If a damage of the dock leveller 10 is recognized the dock leveller 10 has to be repaired according to step S39. Preferably the repair is done by a qualified service field engineer. In case that there is no damage of the dock leveller 10 step S39 can be skipped.

According to next step S40 the dock leveller 10 and/or the safety device 11 is set to normal operation. In this embodiment a reset software according to step S41 is used for setting the safety device 11 back to normal operation. Preferably the reset software is realized as an APP (Application software) for use on a mobile device, like a tablet for example. Thus, the safety device 10 can be only set to normal operation with the use of the reset software.

As soon as the safety device 10 is set to normal operation the alarm is set off according to step S42.

After step S40 a test procedure is performed according to step S43. In this embodiment a test software according to step S44 is used for performing the test procedure. The test software may be a part of the APP for setting the safety device 10 to normal operation according to step S40. Alternatively the test software may be realized as a separate APP for use on a mobile device, like a tablet for example. Preferably the test procedure is performed by a qualified service field engineer.

In the course of the test procedure the function of the electronic sensor 25 and the function of the valve 23 is tested. Preferably this is initiated by a single action of an operator. First the dock leveller 10 is operated with the usual controls. During the sinking of the deck 15 the test procedure is initiated by the single action. The single action may be realized by pressing a button. Preferably the button is arranged on a service tool having the test software. The button can be a real button or a virtual button.

The test procedure or testing method simulates an increase of sinking speed of deck 15. In detail, a velocity of deck 15 is simulated by the software that extends the set threshold. Caused by the threshold exceeding velocity of deck 15 the electronical sensor 25 has to cut off the power to the at least one valve 23. Thus, the sinking of the deck 15 has to stop within a defined distance. The range and/or distance can be defined by demanding that the deck has to stop within 6 % of the length of the deck and/or of the dock leveller. In this embodiment the distance is set to 0,12 m. So, the deck 15 has to be stopped within a range of 0,12 m. The distance is measured at the front edge of the deck 15 or the lip 17. If this is the case, the test has been passed successfully.

In case that in step S34 the measured velocity A is not greater than the set threshold B the velocity of deck 15 is within an allowable range, preferably not faster than 0,05 m/s or 0,12 m/s. If this is the case step S45 will follow after step S34. According to step S46 it is decided if the safety device 10 is checked or not. A check of the safety device 10 according to step S43 may be performed after a maintenance or as a periodically, preferably annular, appointed service or check. In case that no check has to be performed or after finishing the check of step S43 the method ends with step S45.

An advantage of the dock leveller 10 according to the present invention is that the at least annular testing in accordance with EN1398 can be executed after completion of a certification procedure by the testing unit 29 without a test load on the deck 15.

Although preferred embodiments of the present invention and modifications thereof have been described in detail herein, it is to be understood that this invention is not limited to these precise embodiments and variations and may be effected by one skilled in the art without departing from the scope of the invention as defined by the appended claims.

The use of expressions like: "particularly", "preferably" or "especially preferred" etc. is not intended to limit the invention. Features which are not specifically or explicitly described or claimed may be additionally included in the structure or method according to the present invention without deviating from its scope.

### Reference Numerals:

- 10: Dock leveller
- 11: Safety device
- 12: Ramp
- 13: Vehicle
- 14: Bed
- 15: Deck
- 16: Deck joint
- 17: Lip
- 18: Lip joint
- 19: Front edge
- 20: Actuation arrangement
- 21: Cylinder
- 22: Piston
- 23: Valve
- 24: Control unit
- 25: Electronic Sensor
- 26: Ground
- 27: Warning system
- 28: Dashed line
- 29: Testing unit
- 30: Line

- S10: Start
- S11: Monitoring of deck movement
- S12: Detecting a velocity of the deck over a preset threshold
- S13: Closing the electronically controlled valve
- S14: Stopping movement of the deck
- S15: End

- S20: Start
- S21: Coupling testing unit to the dock leveller
- S22: Testing the functionality of defined components of the dock leveller
- S23: Functionality confirmed?
- S24: Releasing a failure indication
- S25: End

- S30: Start
- S31: Using dock leveller
- S32: A: Velocity measurement
- S33: B: Limit setting
- S34: A > B ?
- S35: Block movement
- S36: Alarm on
- S37: Check dock leveller
- S38: Damage?
- S39: Repair dock leveller
- S40: Set to normal operation
- S41: Rest software
- S42: Alarm off
- S43: Perform test procedure
- S44: Test software velocity simulation
- S45: End
- S46: Check safety device?

## Claims

1. Dock leveller (10) for docking a deck (15) to a bed (14) of a vehicle (13), wherein the dock leveller (10) has a deck (15) pivotally connected to a ramp (12), an actuation arrangement (20) for moving the deck (15) and a safety device (11), wherein the safety device (11) has at least one electronically controlled valve (23) for stopping a movement of the deck (15) in response to a control signal, wherein the actuation arrangement (20) for moving the deck (15) comprises a fluid system and/or hydraulic system and at least one fluid driven and/or hydraulically driven cylinder (21) for the movement and/or rotation of the deck (15), wherein the electronically controlled valve (23) is coupled to the actuation arrangement (20) for moving the deck (15) over a preset range and/or to the cylinder (21) for moving the deck (15), whereby the movement of the cylinder (21) is stoppable by the electronically controlled valve (23) in a closed state, **characterized in that** said safety device (11) further comprises at least one electronic sensor (25), wherein an arrangement of the electronic sensor (25) is provided for detecting a fall-movement of the deck (15), wherein the electronic sensor (25) is arranged for detecting a fall-movement of the deck (15) when a velocity of the deck (15) exceeds a preset threshold for a preset period of time and provide a control signal for stopping the movement of the deck (15).

2. Dock leveller (10) according to claim 1, wherein the preset period of time is defined by a bouncing distance of the deck (15) divided by a respective bouncing velocity of the deck (15), the bouncing of the deck occurring during normal loading and/or uploading operation, a velocity exceeding the preset threshold being ignored during the preset time period, wherein the threshold is preferably in a range between 0,05 m/s to 0,20 m/s, wherein the threshold is more preferably set at 0,05 m/s or at 0,12 m/s or at 0,14 m/s.

3. Dock leveller (10) according to any one of the preceding claims, wherein the electronically controlled valve (23) is a magnetic valve.

4. Dock leveller (10) according to any one of the preceding claims, wherein a first electronically controlled valve (23) is assigned to a first fluid access for moving a piston (22) in a first direction within the cylinder (21) and a second electronically controlled valve (23) is assigned to a second fluid access for moving the piston (22) in a second direction within the cylinder (21).

5. Dock leveller (10) according to any one of the preceding claims, wherein a control unit (24) is coupled with the at least one electronic sensor (25) and the at least one electronically controlled valve (23), preferably the control unit (24) is equipped to analyse the control signal of the electronic sensor (25), especially preferred the control unit (24) is designed and/or arranged for sending an actuation signal to the electronically controlled valve (23) for opening the valve (23) and/or for sending a deactivation signal to the electronically controlled valve (23) for closing the valve (23).

6. Dock leveller (10) according to any one of the preceding claims, wherein a testing unit (29) is present for testing an automatic fall-prevention, preferably the testing unit (29) is designed and/or arranged for testing the functionality of the electronic sensor (25), of the electronically controlled valve (23), of a control unit (24) and/or of a warning system (27), especially preferred the testing unit (29) is connected with the electronic sensor (25), the electronically controlled valve (23), the control unit (24) and/or the warning system (27).

7. Dock leveller (10) according to claim 6, wherein the testing unit (29) is designed as a separate service tool which is connectable with a control unit (24) or the testing unit (29) is integrated in a control unit (24).

8. Dock leveller (10) according to any one of the preceding claims, wherein a warning system (27) is present for providing a sound alarm, an audio alarm, a visual alarm and/or a light signal, preferably the warning system (27) is activated in case of a fall-detection of the deck (15), especially preferred in case of a movement of the deck (15) with a velocity higher than a preset threshold, preferably when the velocity of the deck (15) exceeds the preset threshold for a preset time period, and/or in case of a deactivated or closed electronically controlled valve (23), preferably the threshold is set at 0,05 m/s or at 0,12 m/s or at 0,14 m/s.

9. Method of operating a dock leveller (10), according to any one of claims 1-8, comprising the steps of
- moving the deck (15) over a preset range with the actuation arrangement (20)
- detecting a fall movement of the deck (15) by monitoring a velocity and/or an acceleration of the deck (15) with the at least one electronic sensor (25), wherein the at least one electronic sensor (25) and/or the control unit (24) sends the control signal for stopping the movement of the deck (15) when the at least one electronic sensor (25) and/or the control unit (24) detects a movement of the deck (15) with a velocity exceeding the preset threshold for the preset period of time,
- stopping the movement of the deck (15) by the at least one electronic valve (23) in response to the control signal.

10. Method according to preceding claim 9, wherein the preset period of time is less than 1 second and/or is within a range of 0,25 second to 0,9 second, preferably a time period of the velocity exceeding the preset threshold is measured and/or the control signal for stopping the movement of the deck (15) is provided when the velocity of the deck (15) exceeds the preset threshold for a preset time period, especially preferred the threshold is in a range between 0,05 m/s to 0,20 m/s or is set at 0,05 m/s or at 0,12 m/s or at 0,14 m/s.

11. Method according to preceding claim 9 or 10, wherein the movement of deck (15) is stopped or blocked within 6 % of the length of deck (15) or the dock leveller (10) when the electronic sensor (25) and/or the control unit (24) detects a movement of the deck (15) with a velocity exceeding the preset threshold for the preset period of time, preferably the movement of deck (15) is stopped or blocked within a dropping height of the deck (15) and/or the lip (17) of less than 0,2 m or 0,12 m, especially preferred the length of deck (15) and/or of dock leveller (10) is defined as the distance between a front edge of deck (15) or lip (17) and a ramp (12) or deck joint (16) for pivotally connecting the deck (15) to the ramp (12).

12. Method of testing an automatic fall-prevention for a dock leveller (10) according to claim 6, comprising the step of testing the functionality of the electronic sensor (25), of the electronically controlled valve (23), of the control unit (24) and/or of the warning system (27) by the testing unit (29), wherein the testing of the functionality is preferably performed only electronically, wherein an increase of the velocity of deck (15) above the threshold is preferably simulated for forcing a stop of a movement of deck (15).

## Patentansprüche

1. Überladebrücke (10) zum Andocken eines Decks (15) an eine Ladefläche (14) eines Fahrzeugs (13), wobei die Überladebrücke (10) ein Deck (15), das schwenkbar mit einer Rampe (12) verbunden ist, eine Betätigungsanordnung (20) zum Bewegen des Decks (15) und eine Sicherheitsvorrichtung (11) aufweist, wobei die Sicherheitsvorrichtung (11) mindestens ein elektronisch gesteuertes Ventil (23) zum Anhalten einer Bewegung des Decks (15) als Reaktion auf ein Steuersignal aufweist, wobei die Betätigungsanordnung (20) zum Bewegen des Decks (15) ein Fluidsystem und/oder ein hydraulisches System und mindestens einen fluidisch angetriebenen und/oder hydraulisch angetriebenen Zylinder (21) für die Bewegung und/oder Drehung des Decks (15) umfasst, wobei das elektronisch gesteuerte Ventil (23) mit der Betätigungsanordnung (20) zum Bewegen des Decks (15) über einen voreingestellten Bereich und/oder mit dem Zylinder (21) zum Bewegen des Decks (15) gekoppelt ist, wodurch die Bewegung des Zylinders (21) durch das elektronisch gesteuerte Ventil (23) in einem geschlossenen Zustand anhaltbar ist, **dadurch gekennzeichnet, dass** die Sicherheitsvorrichtung (11) ferner mindestens einen elektronischen Sensor (25) umfasst, wobei eine Anordnung des elektronischen Sensors (25) zum Detektieren einer Fallbewegung des Decks (15) bereitgestellt ist, wobei der elektronische Sensor (25) zum Detektieren einer Fallbewegung des Decks (15) angeordnet ist, wenn eine Geschwindigkeit des Decks (15) einen voreingestellten Schwellenwert für einen voreingestellten Zeitraum übersteigt, und ein Steuersignal zum Anhalten der Bewegung des Decks (15) bereitstellt.

2. Überladebrücke (10) nach Anspruch 1, wobei der voreingestellte Zeitraum durch einen Auflageabstand des Decks (15), geteilt durch eine jeweilige Auflagegeschwindigkeit des Decks (15), definiert ist, wobei das Auflegen des Decks während des normalen Ablade- und/oder Aufladebetriebs erfolgt, wobei eine Geschwindigkeit, die den voreingestellten Schwellenwert übersteigt, während des voreingestellten Zeitraums ignoriert wird, wobei der Schwellenwert bevorzugt in einem Bereich zwischen 0,05 m/s und 0,20 m/s liegt, wobei der Schwellenwert bevorzugter auf 0,05 m/s oder auf 0,12 m/s oder auf 0,14 m/s festgelegt ist.

3. Überladebrücke (10) nach einem der vorhergehenden Ansprüche, wobei das elektronisch gesteuerte Ventil (23) ein Magnetventil ist.

4. Überladebrücke (10) nach einem der vorhergehenden Ansprüche, wobei ein erstes elektronisch gesteuertes Ventil (23) einem ersten Fluidzugang zum Bewegen eines Kolbens (22) in eine erste Richtung innerhalb des Zylinders (21) zugeordnet ist und ein zweites elektronisch gesteuertes Ventil (23) einem zweiten Fluidzugang zum Bewegen des Kolbens (22) in eine zweite Richtung innerhalb des Zylinders (21) zugeordnet ist.

5. Überladebrücke (10) nach einem der vorhergehenden Ansprüche, wobei eine Steuereinheit (24) mit dem mindestens einen elektronischen Sensor (25) und dem mindestens einen elektronisch gesteuerten Ventil (23) gekoppelt ist, wobei bevorzugt die Steuereinheit (24) dazu ausgestattet ist, das Steuersignal des elektronischen Sensors (25) zu analysieren, wobei die Steuereinheit (24) besonders bevorzugt zum Senden eines Betätigungssignals an das elektronisch gesteuerte Ventil (23) zum Öffnen des Ventils (23) und/oder zum Senden eines Betätigungssignals an das elektronisch gesteuerte Ventil (23) zum Schließen des Ventils (23) ausgelegt und/oder angeordnet ist.

6. Überladebrücke (10) nach einem der vorhergehenden Ansprüche, wobei eine Testeinheit (29) vorhanden ist, um eine automatische Fallsicherung zu testen, wobei die Testeinheit (29) bevorzugt zum Testen der Funktionsfähigkeit des elektronischen Systems (25), des elektronisch gesteuerten Ventils (23), einer Steuereinheit (24) und/oder eines Warnsystems (27) ausgelegt und/oder angeordnet ist, wobei die Testeinheit (29) besonders bevorzugt mit dem elektronischen Sensor (25), dem elektronisch gesteuerten Ventil (23), der Steuereinheit (24) und/oder dem Warnsystem (27) verbunden ist.

7. Überladebrücke (10) nach Anspruch 6, wobei die Testeinheit (29) als ein separates Wartungsinstrument ausgeführt ist, das mit einer Steuereinheit (24) verbindbar ist, oder die Testeinheit (29) in eine Steuereinheit (24) integriert ist.

8. Überladebrücke (10) nach einem der vorhergehenden Ansprüche, wobei ein Warnsystem (27) vorhanden ist, um einen Tonalarm, einen Audioalarm, einen visuellen Alarm und/oder ein Lichtsignal bereitzustellen, wobei das Warnsystem (27) bevorzugt im Fall einer Falldetektion des Decks (15) aktiviert wird, besonders bevorzugt im Fall einer Bewegung des Decks (15) mit einer Geschwindigkeit, die höher als ein voreingestellter Schwellenwert ist, bevorzugt wenn die Geschwindigkeit des Decks (15) den voreingestellten Schwellenwert für einen voreingestellten Zeitraum übersteigt, und/oder im Fall eines abgeschalteten oder geschlossenen elektronisch gesteuerten Ventils (23), wobei der Schwellenwert bevorzugt auf 0,05 m/s oder auf 0,12 m/s oder auf 0,14 m/s festgelegt ist.

9. Verfahren zum Betreiben einer Überladebrücke (10) nach einem der Ansprüche 1-8, umfassend die folgenden Schritte:
- Bewegen des Decks (15) über einen voreingestellten Bereich mit der Betätigungsanordnung (20),
- Detektieren einer Fallgeschwindigkeit des Decks (15) durch Überwachen einer Geschwindigkeit und/oder einer Beschleunigung des Decks (15) mit dem mindestens einen elektronischen Sensor (25), wobei der mindestens eine elektronische Sensor (25) und/oder die Steuereinheit (24) das Steuersignal zum Anhalten der Bewegung des Decks (15) sendet, wenn der mindestens eine elektronische Sensor (25) und/oder die Steuereinheit (24) eine Bewegung des Decks (15) mit einer Geschwindigkeit detektiert, die den voreingestellten Schwellenwert für den voreingestellten Zeitraum übersteigt,
- Anhalten der Bewegung des Decks (15) durch das mindestens eine elektronische Ventil (23) als Reaktion auf das Steuersignal.

10. Verfahren nach dem vorhergehenden Anspruch 9, wobei der voreingestellte Zeitraum weniger als 1 Sekunde beträgt und/oder in einem Bereich von 0,25 Sekunden bis 0,9 Sekunden liegt, bevorzugt ein Zeitraum, in dem die Geschwindigkeit den voreingestellten Schwellenwert übersteigt, gemessen wird und/oder das Steuersignal zum Anhalten der Bewegung des Decks (15) bereitgestellt wird, wenn die Geschwindigkeit des Decks (15) den voreingestellten Schwellenwert für einen voreingestellten Zeitraum übersteigt, wobei besonders bevorzugt der Schwellenwert in einem Bereich zwischen 0,05 m/s und 0,20 m/s liegt oder auf 0,05 m/s oder auf 0,12 m/s oder auf 0,14 m/s festgelegt ist.

11. Verfahren nach einem der vorhergehenden Ansprüche 9 oder 10, wobei die Bewegung des Decks (15) innerhalb von 6 % der Länge des Decks (15) oder der Überladebrücke (10) angehalten oder blockiert wird, wenn der elektronische Sensor (25) und/oder die Steuereinheit (24) eine Bewegung des Decks (15) mit einer Geschwindigkeit detektiert, die den voreingestellten Schwellenwert für den voreingestellten Zeitraum übersteigt, wobei die Bewegung des Decks (15) bevorzugt innerhalb einer Fallhöhe des Decks (15) und/oder der Lippe (17) von weniger als 0,2 m oder 0,12 m angehalten oder blockiert wird, wobei besonders bevorzugt die Länge des Decks (15) und/oder der Überladebrücke (10) als der Abstand zwischen einer Vorderkante des Decks (15) oder der Lippe (17) und einer Rampe (12) oder einem Deckgelenk (16) zum drehbare Verbinden des Decks (15) mit der Rampe (12) definiert ist.

12. Verfahren zum Testen einer automatischen Fallsicherung für eine Überladebrücke (10) nach Anspruch 6, umfassend den Schritt des Testens der Funktionsfähigkeit des elektronischen Sensors (25), des elektronisch gesteuerten Ventils (23), der Steuereinheit (24) und/oder des Warnsystems (27) durch die Testeinheit (29), wobei das Testen der Funktionsfähigkeit bevorzugt nur elektronisch durchgeführt wird, wobei ein Anstieg der Geschwindigkeit des Decks (15) über den Schwellenwert bevorzugt zum Erzwingen eines Anhaltens einer Bewegung des Decks (15) simuliert wird.

## Revendications

1. Niveleur de quai (10) pour amarrer un plateau (15) à une plateforme (14) d'un véhicule (13), dans lequel le niveleur de quai (10) a un plateau (15) relié de manière pivotante à une rampe (12), un agencement d'actionnement (20) pour déplacer le plateau (15) et un dispositif de sécurité (11), dans lequel le dispositif de sécurité (11) a au moins une vanne à commande électronique (23) pour arrêter un mouvement du plateau (15) en réponse à un signal de commande, dans lequel l'agencement d'actionnement (20) pour déplacer le plateau (15) comprend un système de fluide et/ou un système hydraulique et au moins un vérin entraîné par fluide et/ou un vérin hydraulique (21) pour le déplacement et/ou la rotation du plateau (15), dans lequel la vanne à commande électronique (23) est couplée à l'agencement d'actionnement (20) pour déplacer le plateau (15) sur une plage prédéfinie et/ou au vérin (21) pour déplacer le plateau (15), moyennant quoi le mouvement du vérin (21) peut être arrêté par la vanne à commande électronique (23) dans un état fermé, **caractérisé en ce que** ledit dispositif de sécurité (11) comprend en outre au moins un capteur électronique (25), dans lequel un agencement du capteur électronique (25) est prévu pour détecter un mouvement de chute du plateau (15), dans lequel le capteur électronique (25) est agencé pour détecter un mouvement de chute du plateau (15) lorsqu'une vitesse du plateau (15) dépasse un seuil prédéfini pendant une période prédéfinie et fournir un signal de commande pour arrêter le mouvement du plateau (15).

2. Niveleur de quai (10) selon la revendication 1, dans lequel la période prédéfinie est définie par une distance de rebond du plateau (15) divisée par une vitesse de rebond respective du plateau (15), le rebond du plateau se produisant pendant une opération normale de chargement et/ou de déchargement, une vitesse dépassant le seuil prédéfini étant ignorée pendant la période prédéfinie, dans lequel le seuil est de préférence dans une plage comprise entre 0,05 m/s et 0,20 m/s, dans lequel le seuil est fixé de manière davantage préférée à 0,05 m/s ou à 0,12 m/s ou à 0,14 m/s.

3. Niveleur de quai (10) selon l'une quelconque des revendications précédentes, dans lequel la vanne à commande électronique (23) est une vanne magnétique.

4. Niveleur de quai (10) selon l'une quelconque des revendications précédentes, dans lequel une première vanne à commande électronique (23) est affectée à un premier accès de fluide pour déplacer un piston (22) dans une première direction à l'intérieur du vérin (21) et une seconde vanne à commande électronique (23) est affectée à un second accès de fluide pour déplacer le piston (22) dans une seconde direction à l'intérieur du vérin (21).

5. Niveleur de quai (10) selon l'une quelconque des revendications précédentes, dans lequel une unité de commande (24) est couplée à l'au moins un capteur électronique (25) et à l'au moins une vanne à commande électronique (23), de préférence l'unité de commande (24) est équipée pour analyser le signal de commande du capteur électronique (25), de manière particulièrement préférée, l'unité de commande (24) est conçue et/ou agencée pour envoyer un signal d'actionnement à la vanne à commande électronique (23) pour ouvrir la vanne (23) et/ou pour envoyer un signal de désactivation à la vanne à commande électronique (23) pour fermer la vanne (23).

6. Niveleur de quai (10) selon l'une quelconque des revendications précédentes, dans lequel une unité de test (29) est présente pour tester une prévention automatique des chutes, de préférence l'unité de test (29) est conçue et/ou agencée pour tester la fonctionnalité du capteur électronique (25), de la vanne à commande électronique (23), d'une unité de commande (24) et/ou d'un système d'avertissement (27), de manière particulièrement préférée, l'unité de test (29) est reliée au capteur électronique (25), à la vanne à commande électronique (23), à l'unité de commande (24) et/ou au système d'avertissement (27).

7. Niveleur de quai (10) selon la revendication 6, dans lequel l'unité de test (29) est conçue en tant qu'outil de service séparé qui peut être relié à une unité de commande (24) ou l'unité de test (29) est intégrée dans une unité de commande (24) .

8. Niveleur de quai (10) selon l'une quelconque des revendications précédentes, dans lequel un système d'avertissement (27) est présent pour fournir une alarme sonore, une alarme audio, une alarme visuelle et/ou un signal lumineux, de préférence le système d'avertissement (27) est activé en cas de détection de chute du plateau (15), de manière particulièrement préférée en cas de mouvement du plateau (15) à une vitesse supérieure à un seuil prédéfini, de préférence lorsque la vitesse du plateau (15) dépasse le seuil prédéfini pendant une période prédéfinie, et/ou dans le cas d'une vanne à commande électronique (23) désactivée ou fermée, le seuil est de préférence fixé à 0,05 m/s ou à 0,12 m/s ou à 0,14 m/s.

9. Procédé de fonctionnement d'un niveleur de quai (10), selon l'une quelconque des revendications 1 à 8, comprenant les étapes de :
- déplacement du plateau (15) sur une plage prédéfinie avec l'agencement d'actionnement (20),
- détection d'un mouvement de chute du plateau (15) en surveillant une vitesse et/ou une accélération du plateau (15) avec l'au moins un capteur électronique (25), dans lequel l'au moins un capteur électronique (25) et/ou l'unité de commande (24) envoie le signal de commande pour arrêter le mouvement du plateau (15) lorsque l'au moins un capteur électronique (25) et/ou l'unité de commande (24) détecte un mouvement du plateau (15) à une vitesse dépassant le seuil prédéfini pendant la période prédéfinie,
- arrêt du mouvement du plateau (15) par l'au moins une vanne électronique (23) en réponse au signal de commande.

10. Procédé selon la revendication 9 précédente, dans lequel la période prédéfinie est inférieure à 1 seconde et/ou est dans une plage de 0,25 seconde à 0,9 seconde, de préférence une période pendant laquelle la vitesse dépasse le seuil prédéfini est mesurée et/ou le signal de commande pour arrêter le mouvement du plateau (15) est fourni lorsque la vitesse du plateau (15) dépasse le seuil prédéfini pendant une période prédéfinie, de manière particulièrement préférée, le seuil est dans une plage comprise entre 0,05 m/s et 0,20 m/s ou est fixé à 0,05 m/s ou à 0,12 m/s ou à 0,14 m/s.

11. Procédé selon la revendication 9 ou 10 précédente, dans lequel le mouvement du plateau (15) est arrêté ou bloqué à moins de 6 % de la longueur du plateau (15) ou du niveleur de quai (10) lorsque le capteur électronique (25) et/ou l'unité de commande (24) détecte un mouvement du plateau (15) à une vitesse dépassant le seuil prédéfini pendant la période prédéfinie, de préférence le mouvement du plateau (15) est arrêté ou bloqué à une hauteur de retombée du plateau (15) et/ou du rebord (17) inférieure à 0,2 m ou 0,12 m, de manière particulièrement préférée, la longueur du plateau (15) et/ou du niveleur de quai (10) est définie comme étant la distance entre un bord avant du plateau (15) ou rebord (17) et une rampe (12) ou raccord de plateau (16) pour relier de manière pivotante le plateau (15) à la rampe (12).

12. Procédé de test d'une prévention automatique des chutes pour un niveleur de quai (10) selon la revendication 6, comprenant l'étape de test de la fonctionnalité du capteur électronique (25), de la vanne à commande électronique (23), de l'unité de commande (24) et/ou du système d'avertissement (27) par l'unité de test (29), dans lequel le test de la fonctionnalité est de préférence effectué uniquement de manière électronique, dans lequel une augmentation de la vitesse du plateau (15) au-dessus du seuil est de préférence simulée pour forcer un arrêt d'un mouvement du plateau (15).
